(19) Europäisches Patentamt / European Patent Office / Office européen des brevets

(11) **EP 2 608 239 A1**

## (12) EUROPEAN PATENT APPLICATION
published in accordance with Art. 153(4) EPC

(43) Date of publication:
**26.06.2013 Bulletin 2013/26**

(21) Application number: **11818166.8**

(22) Date of filing: **12.08.2011**

(51) Int Cl.:
**H01H 33/59** *(2006.01)*    **H01H 9/54** *(2006.01)*
**H01H 9/56** *(2006.01)*    **H02H 9/02** *(2006.01)*

(86) International application number:
**PCT/JP2011/068474**

(87) International publication number:
**WO 2012/023524 (23.02.2012 Gazette 2012/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.08.2010 JP 2010185492**

(71) Applicant: **Kabushiki Kaisha Toshiba**
**Minato-ku**
**Tokyo 105-8001 (JP)**

(72) Inventors:
  • **KAWASAKI, Kei**
  **Minato-ku**
  **JP-TOKYO 105-8001 (JP)**
  • **KOSHIZUKA, Tadashi**
  **Minato-ku**
  **JP-TOKYO 105-8001 (JP)**

  • **MARUYAMA, Shiro**
  **Minato-ku**
  **JP-TOKYO 105-8001 (JP)**
  • **SAITOH, Minoru**
  **Minato-ku**
  **JP-TOKYO 105-8001 (JP)**
  • **NAGAYAMA, Noriyuki**
  **Minato-ku**
  **JP-TOKYO 105-8001 (JP)**

(74) Representative: **Fritsche, Daniel et al**
**Awapatent AB**
**Södra Hamngatan 37-41**
**Box 11394**
**404 28 Göteborg (SE)**

## (54) MAGNETIZING INRUSH CURRENT SUPPRESSION DEVICE

(57)    There is provided a magnetizing inrush current suppression apparatus (6) that suppresses a magnetizing inrush current of a three-phase collective operation type circuit breaker (2) to open and close a connection between a power source bus (1) and a modified Woodbridge connection transformer (3), and the apparatus measures a three-phase alternating-current voltage of the power source bus (1), calculates steady magnetic fluxes of the modified Woodbridge connection transformer (3), measures a three-phase alternating-current voltage on the side of the modified Woodbridge connection transformer (3), calculates residual magnetic fluxes after disconnecting of the modified Woodbridge connection transformer (3), and closes the circuit breaker (2) when polarities of the steady magnetic fluxes match polarities of the residual magnetic fluxes in all lines.

F I G. 1

EP 2 608 239 A1

**Description**

Technical Field

Embodiments of the invention relate to a magnetizing inrush current suppression apparatus which suppresses a magnetizing inrush current generated when a circuit breaker is closed.

Background Art

In general, it is known that when a transformer is energized without any load by being connected to a power source in a state where a residual magnetic flux is present in an iron core of the transformer, a large magnetizing inrush current flows. A size of this magnetizing inrush current is several times as large as a rated load current of the transformer. When such a large magnetizing inrush current flows, a system voltage fluctuates, and when the voltage fluctuation is large, a customer is influenced sometimes.

Consequently, it is known that as a method of suppressing the magnetizing inrush current, there is used a circuit breaker with a resistor in which a closing resistance and a contact are connected in series. The circuit breaker with the resistor is connected in parallel with a main contact of the circuit breaker. The circuit breaker with the resistor is closed prior to the main contact of the circuit breaker. Consequently, the magnetizing inrush current is suppressed.

Moreover, as another suppression method, there is known a method in which when a direct grounding system three-phase transformer is energized by three single-phase type circuit breakers, an optional circuit breaker for one phase is precedently closed, and then the remaining circuit breakers for the two phases are closed to suppress a magnetizing inrush current.

Furthermore, it is known that as a method of suppressing a magnetizing inrush current at a time when a non-effective grounding system three-phase transformer is energized by a three-phase collective operation type circuit breaker, a value of a magnetic flux remaining in an iron core at a time when the transformer is disconnected is measured, and a phase to be closed of the circuit breaker is controlled to suppress the magnetizing inrush current at a time when the transformer is energized.

On the other hand, as a method of converting a three-phase alternating-current voltage to single-phase alternating-current voltages, a Scott connection, a Woodbridge connection transformer, a modified Woodbridge connection and the like are known. These connection transformers are used, for example, when a power is supplied to a single-phase electric furnace, a single-phase alternating-current electric car, or the like.

However, the above-mentioned magnetizing inrush current suppression methods have the following problems.

In the magnetizing inrush current suppression method by the circuit breaker with the resistor, it is necessary to add the circuit breaker with the resistor to a usual circuit breaker, and hence the whole size of the circuit breaker increases.

Moreover, in any of the magnetizing inrush current suppression methods, it is not predicted that the above-mentioned transformer which converts the three-phase alternating-current voltage to the single-phase alternating-current voltage is introduced.

For example, in the method in which the residual magnetic flux is measured to control the phase to be closed of the circuit breaker, a control method for the three-phase transformer which is to be used in a power system cannot be applied, as it is, to the transformer which converts the three-phase alternating-current voltage to the single-phase alternating-current voltages. This is because in these connection transformers, even when phase voltages or line voltages on a three-phase alternating-current side are measured, the magnetic flux of the iron core of the transformer cannot be calculated as it is.

Prior Art Documents

Patent Documents

Patent Document 1: Jpn. Pat. Appln. KOKAI Publication No. 2002-75145
Patent Document 2: Jpn. Pat. Appln. KOKAI Publication No. 2008-160100

Non-Patent Document

Non-Patent Document 1: John H. Brunke and the other author, "Elimination of Transformer Inrush Currents by Controlled Switching - Part I: Theoretical Considerations", IEEE Transactions on Power Delivery, IEEE, April 2001, Vol.

16, No. 2, pp. 276 to 280

Disclosure of Invention

An object of embodiments of the invention is to provide a magnetizing inrush current suppression apparatus capable of controlling a phase to be closed for the purpose of suppressing a magnetizing inrush current of a circuit breaker to open and close a connection between a three-phase alternating-current power system which includes a power source and a transformer which converts a three-phase alternating-current voltage to a single-phase alternating-current voltage.

In accordance with an aspect of embodiments of the invention, there is provided a magnetizing inrush current suppression apparatus that suppresses a magnetizing inrush current of a circuit breaker to open and close a connection between a three-phase alternating-current power system including a power source and a Woodbridge connection or modified Woodbridge connection transformer, the apparatus comprising: transformer-side three-phase alternating-current voltage measuring means for measuring a three-phase alternating-current voltage on the transformer side of the circuit breaker; residual magnetic flux calculation means for calculating residual magnetic fluxes of three lines of the transformer after disconnecting of the transformer by the circuit breaker, based on the three-phase alternating-current voltage measured by the transformer-side three-phase alternating-current voltage measuring means; power-source-side three-phase alternating-current voltage measuring means for measuring a three-phase alternating-current voltage on the power source side of the circuit breaker; steady magnetic flux calculation means for calculating steady magnetic fluxes of the three lines of the transformer based on the three-phase alternating-current voltage measured by the power-source-side three-phase alternating-current voltage measuring means; phase determination means for determining a phase in which polarities of the steady magnetic fluxes of the three lines calculated by the steady magnetic flux calculation means match polarities of the residual magnetic fluxes of the three lines calculated by the residual magnetic flux calculation means in the three lines, respectively; and closing means for closing the circuit breaker in the phase determined by the phase determination means.

Brief Description of Drawings

FIG. 1 is a block diagram showing a structure of a power system to which a magnetizing inrush current suppression apparatus according to a first embodiment of the invention is applied;

FIG. 2 is a block diagram showing a structure of a modified Woodbridge connection transformer according to the first embodiment;

FIG. 3 is a block diagram showing a structure of the Woodbridge connection transformer according to the first embodiment;

FIG. 4 is a vector diagram showing, in vectors, primary-side line voltages of the modified Woodbridge connection transformer according to the first embodiment;

FIG. 5 is a vector diagram showing, in vectors, secondary voltages of the modified Woodbridge connection transformer 3 according to the first embodiment;

FIG. 6 is a waveform diagram showing respective voltage waveforms of the line voltages calculated by a steady magnetic flux calculation unit according to the first embodiment;

FIG. 7 is a waveform diagram showing magnetic flux waveforms for explaining an object phase region to be closed of the magnetizing inrush current suppression apparatus according to the first embodiment;

FIG. 8 is a waveform diagram showing the primary line voltages before and after disconnecting of the modified Woodbridge connection transformer by a circuit breaker according to the first embodiment;

FIG. 9 is a waveform diagram showing primary line magnetic fluxes before and after the disconnecting of the modified Woodbridge connection transformer by the circuit breaker according to the first embodiment;

FIG. 10 is a waveform diagram showing the primary line voltages before and after connecting of the modified Woodbridge connection transformer to a power source bus by the circuit breaker according to the first embodiment;

FIG. 11 is a waveform diagram showing the primary line magnetic fluxes before and after the connecting of the modified Woodbridge connection transformer to the power source bus by the circuit breaker according to the first embodiment;

FIG. 12 is a waveform diagram showing primary-side phase currents before and after the connecting of the modified Woodbridge connection transformer to the power source bus by the circuit breaker according to the first embodiment;

FIG. 13 is a waveform diagram showing the primary line voltages before and after connecting of the modified Woodbridge connection transformer to a power source bus by a conventional circuit breaker;

FIG. 14 is a waveform diagram showing the primary line magnetic fluxes before and after the connecting of the modified Woodbridge connection transformer to the power source bus by the conventional circuit breaker;

FIG. 15 is a waveform diagram showing primary-side phase currents before and after the connecting of the modified Woodbridge connection transformer to the power source bus by the conventional circuit breaker;

FIG. 16 is a block diagram showing a structure of a power system to which a magnetizing inrush current suppression apparatus according to a second embodiment of the invention is applied;

FIG. 17 is a block diagram showing a structure of a power system to which a magnetizing inrush current suppression apparatus according to a third embodiment of the invention is applied;

FIG. 18 is a waveform diagram showing voltage waveforms of two secondary voltages measured by a transformer voltage measuring unit according to the third embodiment;

FIG. 19 is a waveform diagram showing voltage waveforms of primary-side line voltages converted by a transformer voltage conversion unit according to the third embodiment;

FIG. 20 is a waveform diagram showing voltage waveforms of the primary-side line voltages according to the third embodiment;

FIG. 21 is a block diagram showing a structure of a power system to which a magnetizing inrush current suppression apparatus according to a fourth embodiment of the invention is applied;

FIG. 22 is a block diagram showing a structure of a power system to which a magnetizing inrush current suppression apparatus according to a fifth embodiment of the invention is applied;

FIG. 23 is a waveform diagram showing voltage waveforms of respective line voltages prior to conversion by a power source voltage conversion unit according to the fifth embodiment;

FIG. 24 is a waveform diagram showing voltage waveforms of secondary voltages of the modified Woodbridge connection transformer which are converted by the power source voltage conversion unit according to the fifth embodiment;

FIG. 25 is a waveform diagram showing voltage waveforms of the secondary voltages of the modified Woodbridge connection transformer according to the fifth embodiment;

FIG. 26 is a waveform diagram showing voltage waveforms of the secondary voltages of the modified Woodbridge connection transformer which are converted by the power source voltage conversion unit according to the fifth embodiment;

FIG. 27 is a waveform diagram showing magnetic flux waveforms for explaining an object phase region to be closed of the magnetizing inrush current suppression apparatus according to the fifth embodiment;

FIG. 28 is a waveform diagram showing the secondary voltages from disconnecting to connecting of the modified Woodbridge connection transformer by a circuit breaker according to the fifth embodiment;

FIG. 29 is a waveform diagram showing secondary magnetic fluxes from the disconnecting to the connecting of the modified Woodbridge connection transformer by the circuit breaker according to the fifth embodiment;

FIG. 30 is a waveform diagram showing magnetizing inrush currents from the disconnecting to the connecting of the modified Woodbridge connection transformer by the circuit breaker according to the

fifth embodiment; and

FIG. 31 is a block diagram showing a structure of a power system to which a magnetizing inrush current suppression apparatus according to a sixth embodiment of the invention is applied.

Mode for Carrying Out the Invention

Hereinafter, embodiments of the invention will be described with reference to the drawings.

(First Embodiment)

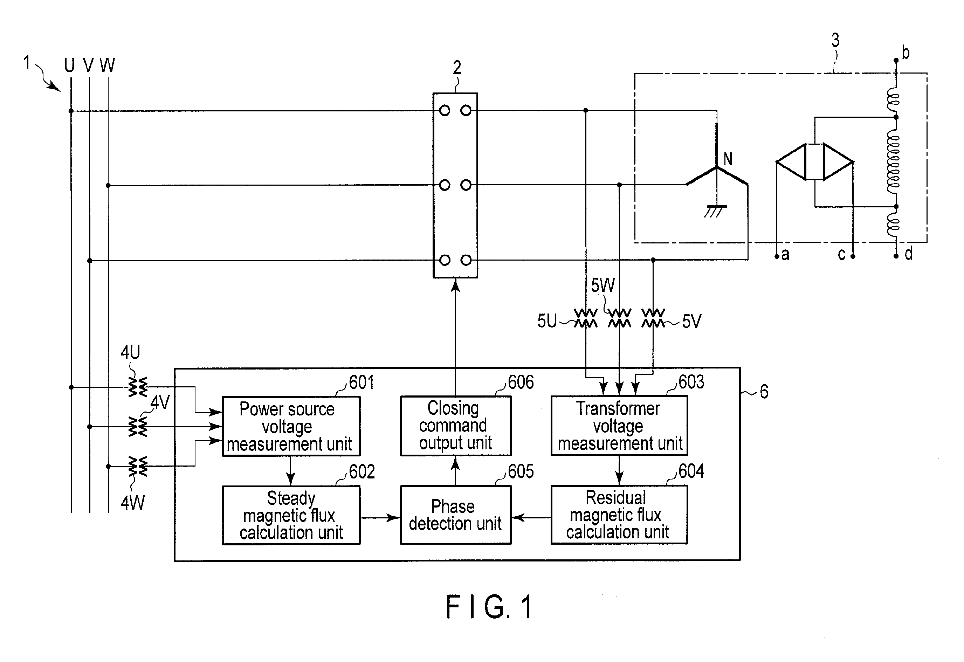

FIG. 1 is a block diagram showing a structure of a power system to which a magnetizing inrush current suppression apparatus 6 according to a first embodiment of the invention is applied. It is to be noted that the same parts in the subsequent drawings are denoted with the same reference marks, detailed descriptions thereof are omitted, and different parts will mainly be described. Also in the subsequent embodiments, repeated descriptions are similarly omitted.

The power system according to the present embodiment includes a power source bus (the bus of the power system) 1, a circuit breaker 2, a modified Woodbridge connection transformer 3, power source voltage detectors 4U, 4V and 4W for three phases which are provided in the power source bus 1, transformer primary voltage detectors 5U, 5V and 5W for the three phases which are provided on a primary side of the modified Woodbridge connection transformer 3, and the magnetizing inrush current suppression apparatus 6.

The power source bus 1 is the bus of the power system including a three-phase alternating-current power source constituted of a U-, a V- and a W-phase.

The modified Woodbridge connection transformer 3 is connected to the power source bus 1 via the circuit breaker 2. The modified Woodbridge connection transformer 3 is disposed in an effective grounding system or a non-effective grounding system. The modified Woodbridge connection transformer 3 converts, to two single-phase alternating-current voltages, a three-phase alternating-current voltage supplied from the power source bus 1. In the modified Woodbridge connection transformer 3, a three-phase alternating-current side is the primary side, and a single-phase alternating-current side is a secondary side. Additionally, as the modified Woodbridge connection transformer 3, a Woodbridge connection transformer having the same transformation principle may be used. Therefore, also in the following (including the subsequent embodiments), the modified Woodbridge connection transformer 3 may be replaced with the Woodbridge connection transformer as long as the transformer is not particularly distinguished.

The circuit breaker 2 is interposed between the power source bus 1 and the modified Woodbridge connection transformer 3. The circuit breaker 2 is the circuit breaker of a three-phase collective operation type in which main contacts of all three U-, V- and W-phases are collectively operated. When the circuit breaker 2 is closed, The modified Woodbridge connection transformer 3 is energized by the power source bus 1. When the circuit breaker 2 is opened, the modified Woodbridge connection transformer 3 is disconnected from the power source bus 1.

The three power source voltage detectors 4U, 4V and 4W are measuring devices for measuring phase voltages (voltages to ground) of the U-, V- and W-phases of the power source bus 1, respectively. Each of the power source voltage detectors 4U, 4V and 4W is, for example, an instrument transformer (voltage transformer [VT]). The power source voltage detectors 4U, 4V and 4W output detected values as detection signals to the magnetizing inrush current suppression apparatus 6.

The three transformer primary voltage detectors 5U, 5V and 5W are measuring instruments for measuring terminal voltages of terminals (U-, V-, and W-phase) on the primary side of the modified Woodbridge connection transformer 3, respectively. Each of the transformer primary voltage detectors 5U, 5V and 5W is, for example, an instrument transformer. The transformer primary voltage detectors 5U, 5V and 5W output detected values as detection signals to the magnetizing inrush current suppression apparatus 6.

The magnetizing inrush current suppression apparatus 6 outputs a closing command to the main contact of the circuit breaker 2 on the basis of the detection signals received from the power source voltage detectors 4U, 4V and 4W and the transformer primary voltage detectors 5U, 5V and 5W, respectively. Consequently, the circuit breaker 2 is closed.

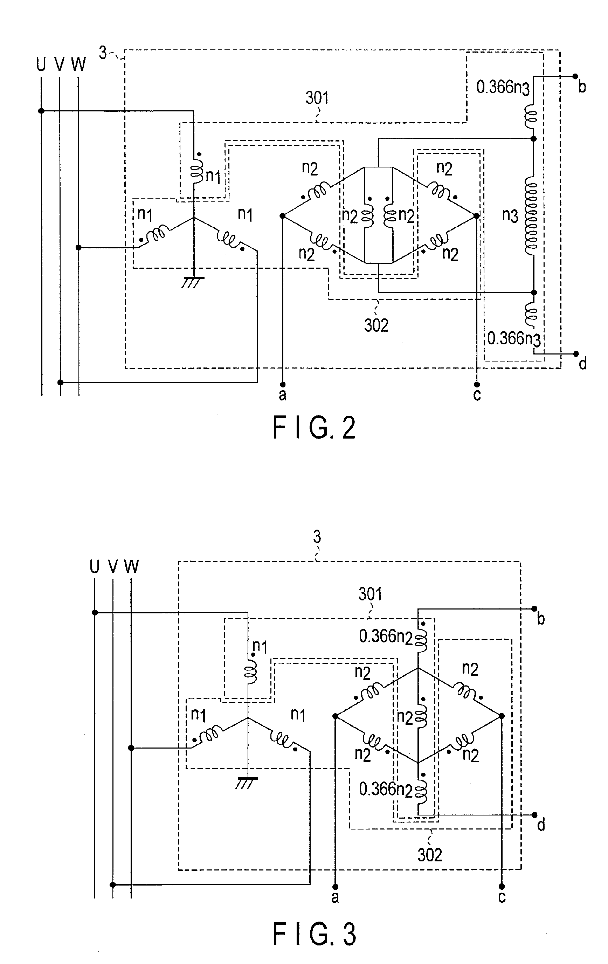

FIG. 2 is a block diagram showing a structure of the modified Woodbridge connection transformer 3 according to the present embodiment.

The modified Woodbridge connection transformer 3 includes a main (M-phase) transformer 302 and a teaser transformer 301.

The main transformer 302 has two windings having an equal number of turns on the secondary side. The teaser transformer 301 is connected to a single-winding transformer including a winding having a turn ratio of 1:0.366:0.366 on the secondary side. In the modified Woodbridge connection transformer 3, two delta-connected windings are connected back to back on the secondary side.

Here, there will be described a case where the transformer 3 has a Woodbridge connection.

FIG. 3 is a block diagram showing a structure of the Woodbridge connection transformer 3 according to the present embodiment.

The Woodbridge connection transformer 3 includes the main (M-phase) transformer 302 and the teaser transformer 301.

The main transformer 302 has two windings having an equal number of turns on the secondary side. The teaser transformer 301 includes a winding having a turn ratio of 1:0.366:0.366 on the secondary side. In the Woodbridge connection transformer 3, two delta-connected windings are connected back to back on the secondary side.

That is, in the modified Woodbridge connection, the winding of the teaser transformer 301 of the Woodbridge connection is used as another single-winding transformer.

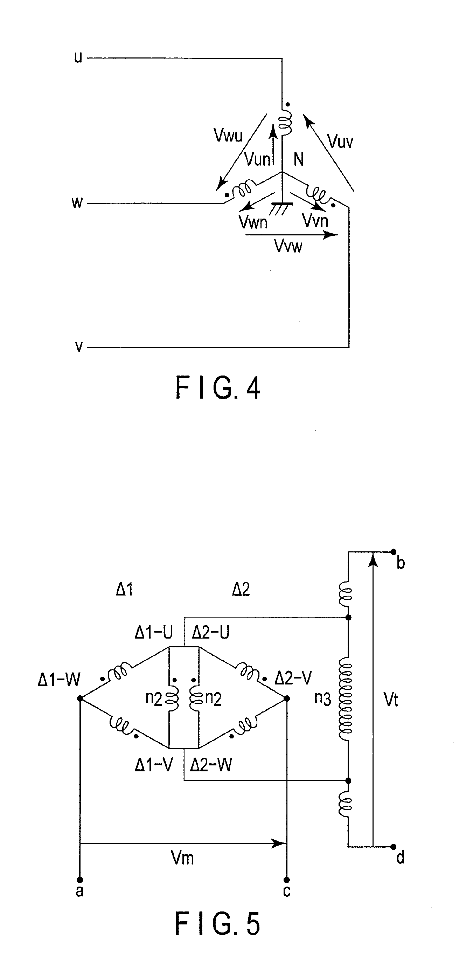

FIG. 4 is a vector diagram showing, in vectors, primary-side line voltages Vuv, Vvw and Vwu of the modified Woodbridge connection transformer 3 according to the present embodiment. FIG. 5 is a vector diagram showing, in vectors, secondary voltages Vt and Vm of the modified Woodbridge connection transformer 3 according to the present embodiment.

The voltage Vvw between the V- and W-phases on the primary side becomes the same phase as the voltage (the secondary voltage of the M-phase transformer 302) Vm applied across secondary terminals c and a of the main transformer 302. Moreover, a primary-side U-phase voltage (the voltage between a neutral point N [to ground] and a U-phase terminal) Vun becomes the same phase as the voltage (the secondary voltage of the teaser transformer 301) Vt applied across secondary terminals b and d of the teaser transformer 301. Therefore, the phase of secondary voltage Vt of the teaser transformer 301 is advanced as much 90 degrees relative to the phase of secondary voltage Vm of the main transformer 302.

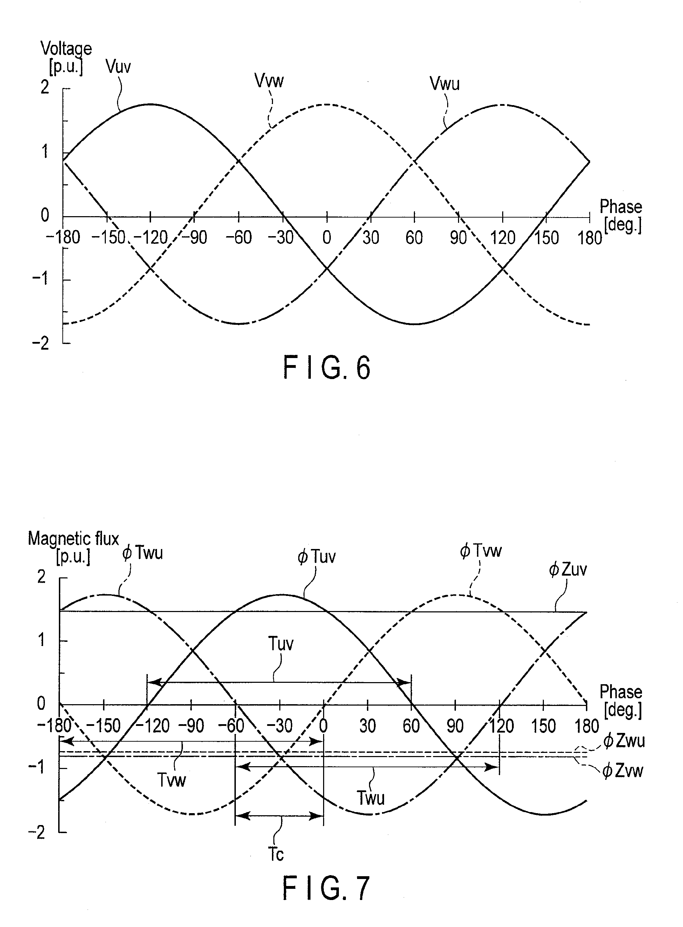

FIG. 6 is a waveform diagram showing respective voltage waveforms of line voltages Vuv, Vvw and Vwu calculated by a steady magnetic flux calculation unit 602 according to the present embodiment. FIG. 7 is a waveform diagram showing magnetic flux waveforms for explaining an object phase region Tc to be closed of the magnetizing inrush current suppression apparatus 6 according to the present embodiment.

A structure of the magnetizing inrush current suppression apparatus 6 will be described with reference to FIG. 1, FIG. 6 and FIG. 7.

The magnetizing inrush current suppression apparatus 6 includes a power source voltage measuring unit 601, the steady magnetic flux calculation unit 602, a transformer voltage measuring unit 603, a residual magnetic flux calculation unit 604, a phase detection unit 605, and a closing command output unit 606.

The power source voltage measuring unit 601 measures the respective phase voltages of the power source bus 1 on the basis of the detection signals detected by the power source voltage detectors 4U, 4V and 4W. The power source voltage measuring unit 601 outputs the respective measured phase voltages to the steady magnetic flux calculation unit 602.

The steady magnetic flux calculation unit 602 calculates line voltage Vuv between the U- and V-phases, line voltage Vvw between the V- and W-phases, and line voltage Vwu between the W- and U-phases on the basis of the respective phase voltages measured by the power source voltage measuring unit 601. The steady magnetic flux calculation unit 602 integrates calculated line voltages Vuv, Vvw and Vwu, respectively. The steady magnetic flux calculation unit 602 obtains these integrated values as steady-time magnetic fluxes (steady magnetic fluxes) $\varphi$Tuv, $\varphi$Tvw and $\varphi$Twu. The steady magnetic flux calculation unit 602 calculates steady magnetic fluxes $\varphi$Tuv, $\varphi$Tvw and $\varphi$Twu until the circuit breaker 2 is closed. The steady magnetic flux calculation unit 602 outputs calculated steady magnetic fluxes $\varphi$Tuv, $\varphi$Tvw and $\varphi$Twu to the phase detection unit 605.

The transformer voltage measuring unit 603 measures a primary voltage of each phase of the modified Woodbridge connection transformer 3 on the basis of the detection signals detected by the transformer primary voltage detectors 5U, 5V and 5W. The transformer voltage measuring unit 603 outputs the respective measured phase voltages to the residual magnetic flux calculation unit 604.

The residual magnetic flux calculation unit 604 calculates line voltage Vuv between the U- and V-phases, line voltage Vvw between the V- and W-phases, and line voltage Vwu between the W- and U-phases immediately after the disconnecting of the modified Woodbridge connection transformer 3 by the circuit breaker 2, on the basis of the respective phase voltages measured by the transformer voltage measuring unit 603. The residual magnetic flux calculation unit 604 integrates calculated line voltages Vuv, Vvw and Vwu, respectively. The residual magnetic flux calculation unit 604 obtains these integrated values as residual magnetic fluxes (primary line magnetic fluxes) $\varphi$Zuv, $\varphi$Zvw and $\varphi$Zwu of the iron core of the modified Woodbridge connection transformer 3. The residual magnetic flux calculation unit 604 outputs calculated residual magnetic fluxes $\varphi$Zuv, $\varphi$Zvw and $\varphi$Zwu to the phase detection unit 605.

As shown in FIG. 7, the phase detection unit 605 detects, line by line, phase sections Tuv, Tvw and Twu in which polarities of steady magnetic fluxes $\varphi$Tuv, $\varphi$Tvw and $\varphi$Twu calculated by the steady magnetic flux calculation unit 602 match polarities of residual magnetic fluxes $\varphi$Zuv, $\varphi$Zvw and $\varphi$Zwu calculated by the residual magnetic flux calculation unit 604, respectively. The phase detection unit 605 identifies the section Tc in which the phase sections Tuv, Tvw and Twu of each detected line overlap with one another in all the three sections. The identified section Tc is the object phase region to be closed for closing the circuit breaker 2. The phase detection unit 605 outputs, to the closing command output unit 606, the detected object phase region (the section) Tc to be closed.

The closing command output unit 606 outputs the closing command to an operation mechanism which drives the main contact of the circuit breaker 2 in the object phase region Tc to be closed which is detected by the phase detection unit 605. Consequently, the circuit breaker 2 is closed.

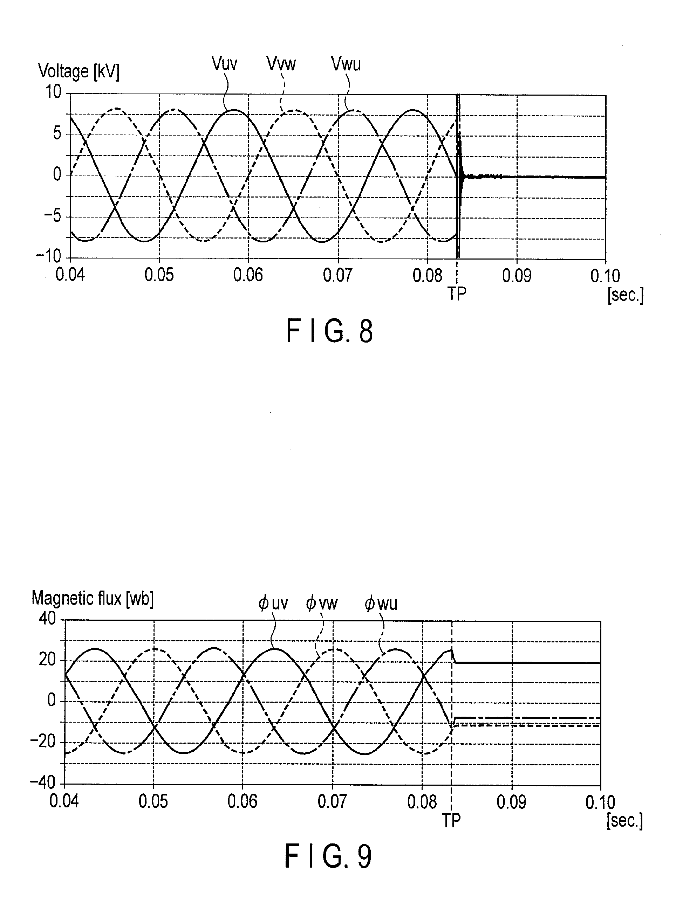

Next, suppression of a magnetizing inrush current by the magnetizing inrush current suppression apparatus 6 will be described with reference to FIG. 8 to FIG. 12.

FIG. 8 and FIG. 9 show an example of a state before and after disconnecting TP of the modified Woodbridge connection transformer 3 by the circuit breaker 2. FIG. 8 is a waveform diagram showing primary line voltages Vuv, Vvw and Vwu. FIG. 9 is a waveform diagram showing primary line magnetic fluxes $\varphi$uv, $\varphi$vw and $\varphi$wu.

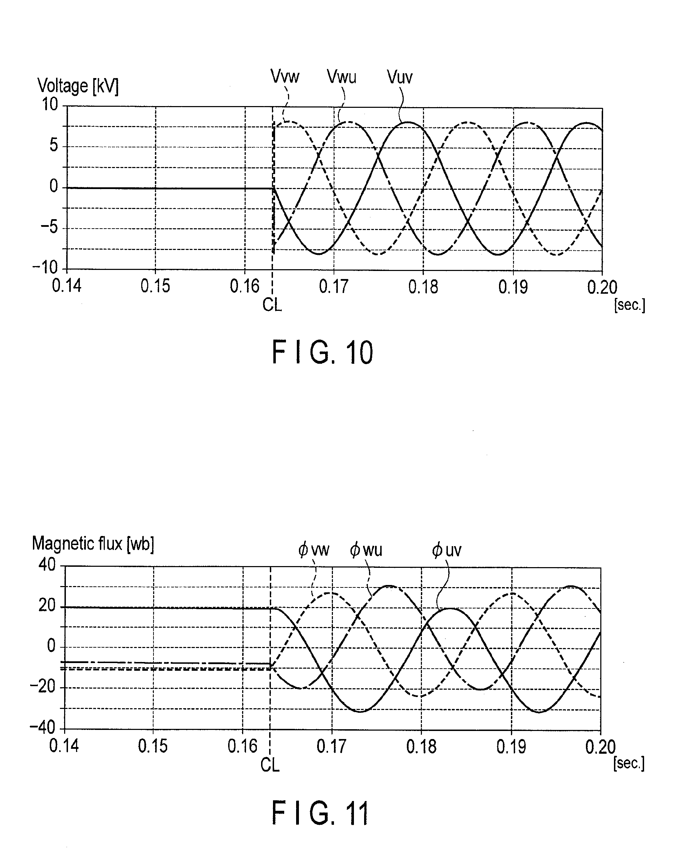

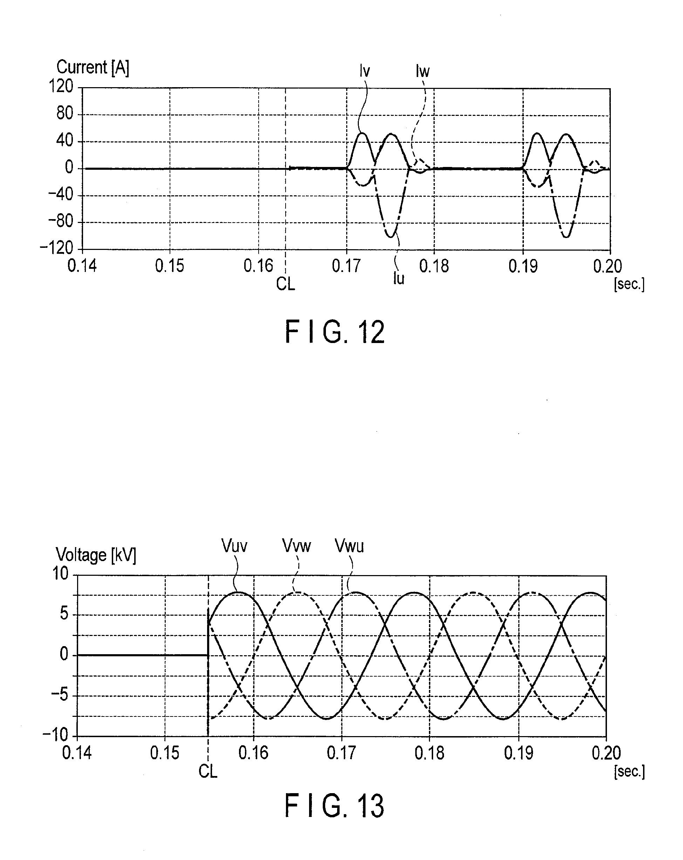

FIG. 10 to FIG. 12 show an example of a state before and after connecting CL of the modified Woodbridge connection transformer 3 to the power source bus 1 by the circuit breaker 2. FIG. 10 is a waveform diagram showing primary line voltages Vuv, Vvw and Vwu. FIG. 11 is a waveform diagram showing primary line magnetic fluxes $\varphi$uv, $\varphi$vw and $\varphi$wu. FIG. 12 is a waveform diagram showing primary-side phase currents (magnetizing inrush currents) Iu, Iv and Iw.

When the three-phase voltage shown in FIG. 8 is applied to the primary side of the modified Woodbridge connection transformer 3, after the opening of the circuit breaker 2, residual magnetic fluxes $\varphi$uv, $\varphi$vw and $\varphi$wu after the disconnecting TP shown in FIG. 9 are present.

According to the magnetizing inrush current suppression apparatus 6, when the circuit breaker 2 is closed in the object phase region Tc to be closed shown in FIG. 7, primary line magnetic fluxes $\varphi$uv, $\varphi$vw and $\varphi$wu shown in FIG. 11 appear against primary line voltages Vuv, Vvw and Vwu shown in FIG. 10. At this closing of the circuit breaker 2, magnetizing inrush currents Iu, Iv and Iw shown in FIG. 12 are generated. The magnetizing inrush currents Iu, Iv and Iw are about 105 amperes at maximum.

Next, for comparison, there will be described an example of magnetizing inrush currents Iu, Iv and Iw of the circuit breaker 2 which are not operated by the magnetizing inrush current suppression apparatus 6 (the circuit breaker is not closed in the object phase region Tc to be closed).

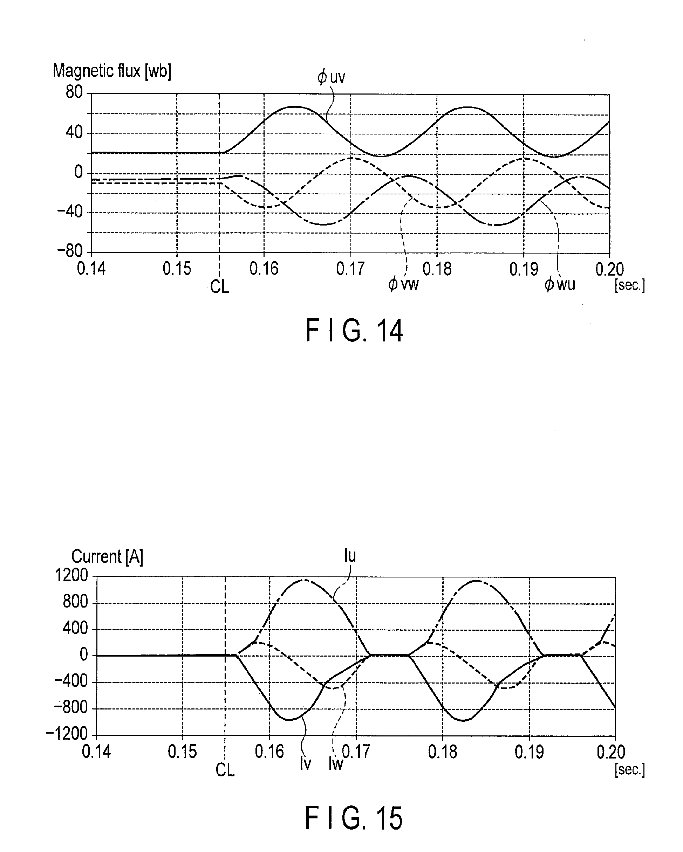

FIG. 13 to FIG. 15 show an example of a state before and after the connecting CL of the modified Woodbridge connection transformer 3 to the power source bus 1 by a conventional closing method of the circuit breaker 2. FIG. 13 is a waveform diagram showing primary line voltages Vuv, Vvw and Vwu. FIG. 14 is a waveform diagram showing primary line magnetic fluxes φuv, φvw and φwu. FIG. 15 is a waveform diagram showing primary phase currents (magnetizing inrush currents) Iu, Iv and Iw. Conditions in FIG. 13 to FIG. 15 are the same as those shown in FIG. 8 to FIG. 12 except the phase to be closed of the circuit breaker 2.

When the circuit breaker 2 is closed while phase control by the magnetizing inrush current suppression apparatus 6 is not executed as shown in FIG. 15, magnetizing inrush currents Iu, Iv and Iw reach a maximum of close to 1200 amperes.

According to the present embodiment, owing to the magnetizing inrush current suppression apparatus 6, in the phase section in which the polarities of steady magnetic fluxes φTuv, φTvw and φTwu match the polarities of residual magnetic fluxes φZuv, φZvw and φZwu in all the three phases, respectively, the modified Woodbridge connection transformer 3 is connected by the circuit breaker 2. When the phase to be closed is controlled in this way to connect the modified Woodbridge connection transformer 3 to the power source bus 1, the magnetizing inrush current can be suppressed.

Here, in a non-effective grounding system three-phase transformer, when there is a difference in current interrupting phases, a direct-current voltage remains at the neutral point sometimes. In this case, even when the phase voltages are integrated, the residual magnetic fluxes of the windings cannot accurately be calculated. However, the line voltages are not affected by the direct-current voltage. In the magnetizing inrush current suppression apparatus 6, the line voltages are integrated to obtain the magnetic fluxes, whereby the residual magnetic fluxes can accurately be calculated.

(First Modification of First Embodiment)

A structure of the magnetizing inrush current suppression apparatus 6 according to the present modification is a structure where in the first embodiment, the object phase region Tc to be closed is detected by using the phase voltages or line voltages measured by the power source voltage measuring unit 601 in place of steady magnetic fluxes φTuv, φTvw and φTwu calculated by the steady magnetic flux calculation unit 602.

The magnetizing inrush current suppression apparatus 6 detects, as the object phase region Tc to be closed, a phase section in which all polarities of the respective phase voltages or line voltages measured by the power source voltage measuring unit 601 match polarities of the respective line residual magnetic fluxes φZuv, φZvw and φZwu calculated by the residual magnetic flux calculation unit 604.

Here, the phase difference between the line voltage and the line steady magnetic flux is 90 degrees. Therefore, when the determined object phase region Tc to be closed is retarded by as much as 90 degrees, the region matches the object region to be closed of the first embodiment.

Moreover, the phase voltage lags the line voltage by 30 degrees. Therefore, when the line steady magnetic flux is compared with the phase voltage, the phase difference between the phase voltage and the line steady magnetic flux is 60 degrees, and when the object phase region Tc to be closed which is determined in advance is retarded as much as 60 degrees, the region matches the object region Tc to be closed of the first embodiment. The closing command output unit 606 outputs the closing command to the circuit breaker 2 in the detected object phase region Tc to be closed.

Additionally, this phase difference may be set beforehand as a corrected value to the magnetizing inrush current suppression apparatus 6.

According to the present modification, it is not necessary to perform the calculation by the steady magnetic flux calculation unit 602. Therefore, when the steady magnetic flux calculation unit 602 is eliminated, the magnetizing inrush current suppression apparatus 6 can execute simpler control.

Moreover, the magnetizing inrush current suppression apparatus 6 executes less control processing (computation processing or the like) than in the first embodiment. Consequently, closing can be performed with the magnetizing inrush current suppressed earlier.

(Second Modification of First Embodiment)

In a structure of the magnetizing inrush current suppression apparatus 6 according to the present modification, the closing command is output as follows.

The phase detection unit 605 detects a line of the largest residual magnetic flux of residual magnetic fluxes

φZuv, φZvw and φZwu calculated by the residual magnetic flux calculation unit 604. The phase detection unit 605 detects a voltage zero point at which the voltage of the detected line transits from the same polarity as that of the residual magnetic flux of this line (the largest residual magnetic flux) to reverse polarity. The phase detection unit 605 outputs the detected voltage zero point to the closing command output unit 606. The closing command output unit 606 uses the voltage zero point detected by the phase detection unit 605 as an object phase to be closed, to output the closing command to the circuit breaker 2.

According to the present modification, the following function and effect can be obtained.

The voltage zero point detected by the phase detection unit 605 eventually becomes a substantial center of the phase section in which the polarities of steady magnetic fluxes φTuv, φTvw and φTwu match the polarities of residual magnetic fluxes φZuv, φZvw and φZwu, respectively, in all the three phases. Therefore, the function and effect similar to those of the first embodiment can be obtained.

In the above-mentioned closing method, the zero point of the line voltage of the largest residual magnetic flux is detected, but there may be detected a voltage zero point at which the phase voltage of the phase corresponding to the line (for example, the U-phase in the case of the line between the U- and V-phases) transits from the same polarity as that of the line residual magnetic flux to the reverse polarity.

The phase difference between the phase voltage and the line voltage is 30 degrees. Therefore, even when the line voltage to be originally desirably compared is replaced with the phase voltage which is compared, the effect of suppressing the magnetizing inrush current can be obtained as long as the phase difference is about 30 degrees.

(Second Embodiment)

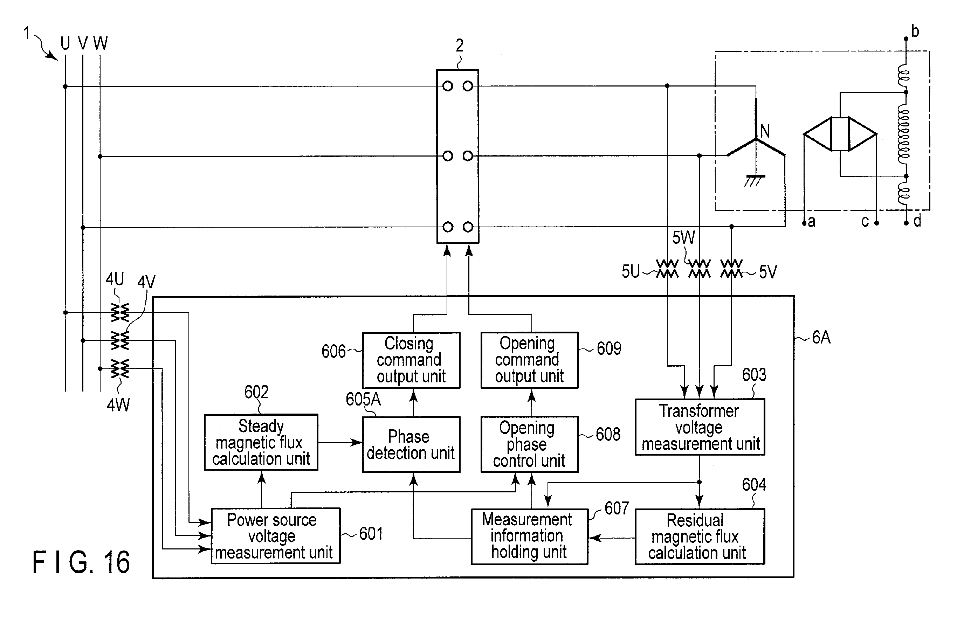

FIG. 16 is a block diagram showing a structure of a power system to which a magnetizing inrush current suppression apparatus 6A according to a second embodiment of the invention is applied.

The magnetizing inrush current suppression apparatus 6A has a structure where in the magnetizing inrush current suppression apparatus 6 according to the first embodiment shown in FIG. 1, a phase detection unit 605A is provided in place of the phase detection unit 605, and a measurement information holding unit 607, an opening phase control unit 608 and an opening command output unit 609 are added. The other structure is similar to the magnetizing inrush current suppression apparatus 6 according to the first embodiment.

Prior to an operation of the magnetizing inrush current suppression apparatus 6A, the measurement information holding unit 607 measures a voltage interrupting phase of a primary voltage measured by a transformer voltage measuring unit 603 and a magnetic flux signal calculated by a residual magnetic flux calculation unit 604 when a circuit breaker 2 is opened a plurality of times. The measurement information holding unit 607 holds, as measurement information, information on characteristics of a residual magnetic flux, for example, a relation between the interrupting phase and the residual magnetic flux on the basis of the measured voltage interrupting phase and magnetic flux signal.

Into the opening phase control unit 608, there are input the measurement information held by the measurement information holding unit 607 and respective phase voltages of the power source bus 1 which are measured by the power source voltage measuring unit 601. The opening phase control unit 608 estimates respective line residual magnetic fluxes φZuv, φZvw and φZwu from the measurement information. The opening phase control unit 608 controls an opening phase of a main contact of the circuit breaker 2 so that the interrupting phase constantly becomes the same, on the basis of the estimated residual magnetic fluxes φZuv, φZvw and φZwu and the respective phase voltages. The opening phase control unit 608 outputs the controlled opening phase to the opening command output unit 609.

The opening command output unit 609 outputs an opening command to an operation mechanism which drives the main contact of the circuit breaker 2, on the basis of the opening phase received from the opening phase control unit 608. Consequently, the circuit breaker 2 is opened.

Into the phase detection unit 605A, there are input the measurement information held by the measurement information holding unit 607 and steady magnetic fluxes φTuv, φTvw and φTwu calculated by a steady magnetic flux calculation unit 602. The phase detection unit 605A estimates residual magnetic fluxes φZuv, φZvw and φZwu from the measurement information held by the measurement information holding unit 607. The phase detection unit 605A identifies the object phase region Tc to be closed for closing the circuit breaker 2, on the basis of residual magnetic fluxes φZuv, φZvw and φZwu and steady magnetic fluxes φTuv, φTvw and φTwu. A method of identifying the object phase region Tc to be closed is similar to the first embodiment.

Here, the opening phase control unit 608 executes the phase control so that the interrupting phase constantly becomes the same. Therefore, the phase detection unit 605A may constantly detect the same object phase region Tc to be closed, when there is not any change in the information held by the measurement information holding unit 607 (when the measurement information is not updated).

According to the present embodiment, the following function and effect can be obtained.

After the circuit breaker 2, a modified Woodbridge connection transformer 3 and the like are installed once in the power system, circuit conditions of this power system are constantly the same. Therefore, when the phase at the interrupting by the circuit breaker 2 is constantly set to be the same, values of residual magnetic fluxes φZuv, φZvw and φZwu of the modified Woodbridge connection transformer 3 must constantly be the same.

When the modified Woodbridge connection transformer 3 is disconnected by the circuit breaker 2, the magnetizing inrush current suppression apparatus 6A controls the opening phase of the circuit breaker 2 so that the interrupting phase constantly becomes the same, to disconnect the transformer. That is, the magnetizing inrush current suppression apparatus 6A can constantly set residual magnetic fluxes φZuv, φZvw and φZwu to the same value. Therefore, the magnetizing inrush current suppression apparatus 6A can constantly set a phase to be closed for suppressing the magnetizing inrush current to the same phase, also when the circuit breaker 2 is closed to energize the modified Woodbridge connection transformer 3.

Therefore, even when transformer primary voltage detectors 5U, 5V and 5W are not constantly connected, the magnetizing inrush current suppression apparatus 6A can constantly obtain the information of residual magnetic fluxes φZuv, φZvw and φZwu of the modified Woodbridge connection transformer 3 after the disconnecting by the circuit breaker 2, on the basis of the measurement information held by the measurement information holding unit 607. Therefore, the transformer primary voltage detectors 5U, 5V and 5W may be connected only at measurement by the measurement information holding unit 607, and may be removed in a usual operation state. Needless to say, the transformer primary voltage detectors 5U, 5V and 5W may permanently be installed.

(Third Embodiment)

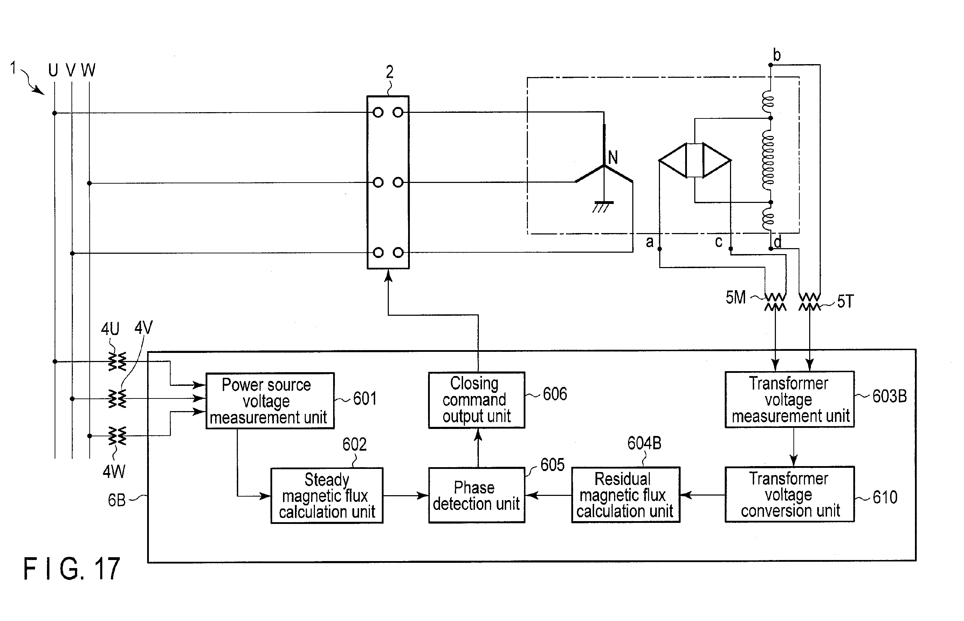

FIG. 17 is a block diagram showing a structure of a power system to which a magnetizing inrush current suppression apparatus 6B according to a third embodiment of the invention is applied.

The power system according to the present embodiment has a structure where in the power system according to the first embodiment shown in FIG. 1, transformer secondary voltage detectors 5T and 5M are provided in place of the transformer primary voltage detectors 5U, 5V and 5W.

The magnetizing inrush current suppression apparatus 6B has a structure where in the magnetizing inrush current suppression apparatus 6 according to the first embodiment shown in FIG. 1, the transformer voltage measuring unit 603 is replaced with a transformer voltage measuring unit 603B, the residual magnetic flux calculation unit 604 is replaced with a residual magnetic flux calculation unit 604B, and a transformer voltage conversion unit 610 is added. The other structure is similar to the first embodiment.

The transformer voltage measuring unit 603B measures two secondary voltages Vt and Vm of a modified Woodbridge connection transformer 3 on the basis of detection signals detected by the transformer secondary voltage detectors 5T and 5M. Secondary voltage Vm is the secondary voltage (the voltage between terminals c and a) of a main transformer 302. Secondary voltage Vt is the secondary voltage (the voltage between terminals b and d) of a teaser transformer 301. The transformer voltage measuring unit 603B outputs the two measured secondary voltages Vt and Vm to the transformer voltage conversion unit 610.

The transformer voltage conversion unit 610 converts the two single-phase alternating-current voltages Vt and Vm measured by the transformer voltage measuring unit 603B to primary-side line voltages VDuv, VDvw and VDwu by the following equations. Primary-side line voltage VDuv is the converted line voltage between a U- and a V-phase. Primary-side line voltage VDvw is the converted line voltage between the V- and a W-phase. Primary-side line voltage VDwu is the converted line voltage between the W- and U-phases. The transformer voltage conversion unit 610 outputs the converted primary-side line voltages VDuv, VDvw and VDwu to the residual magnetic flux calculation unit 604B.

$$VDuv = (\sqrt{3}/2)Vt - (1/2)Vm \qquad (1)$$

$$VDvw = Vm \qquad (2)$$

$$VDwu = -(\sqrt{3}/2)Vt - (1/2)Vm \qquad (3)$$

Additionally, $\sqrt{3}/2$ may be replaced with 0.866.

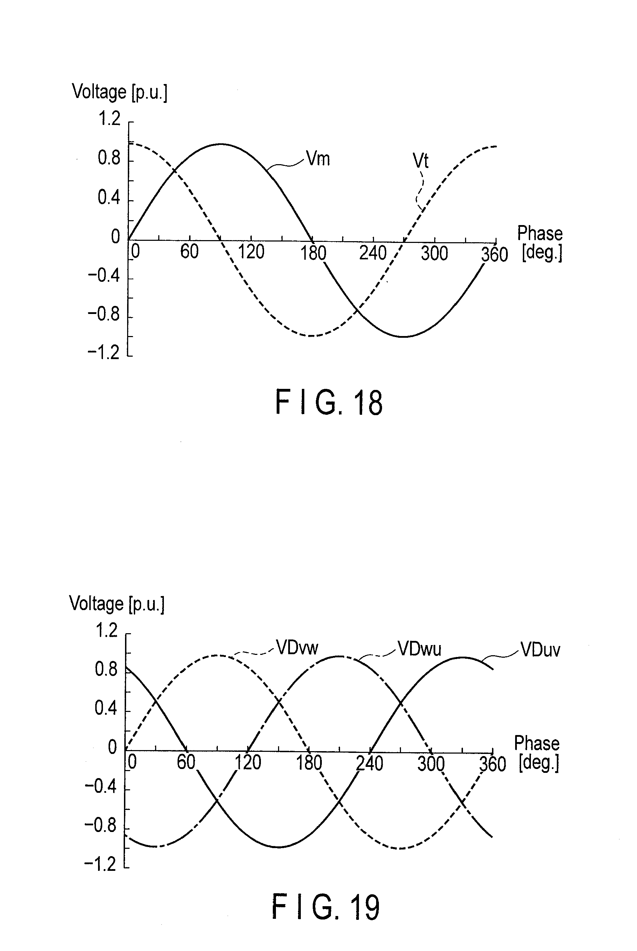

Computation processing by the transformer voltage conversion unit 610 according to the present embodiment will be described with reference to FIG. 18 to FIG. 20.

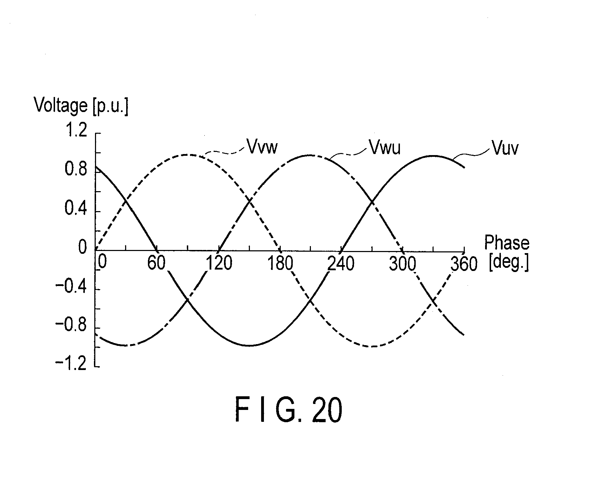

FIG. 18 is a waveform diagram showing voltage waveforms of the two secondary voltages Vt and Vm measured by the transformer voltage measuring unit 603B. FIG. 19 is a waveform diagram showing voltage waveforms of primary-side line voltages VDuv, VDvw and VDwu converted by the transformer voltage conversion unit 610. FIG. 20 is a waveform diagram showing voltage waveforms of primary-side line voltages Vuv, Vvw and Vwu.

The transformer voltage conversion unit 610 converts the two secondary voltages Vt and Vm shown in FIG. 18 to primary-side line voltages VDuv, VDvw and VDwu shown in FIG. 19. Consequently, the transformer voltage conversion unit 610 can obtain the same voltage waveforms on a pu value (a ratio to a rating) basis as primary-side line voltages Vuv, Vvw and Vwu shown in FIG. 20.

The residual magnetic flux calculation unit 604B integrates line voltages VDuv, VDvw and VDwu converted by the transformer voltage conversion unit 610, respectively, immediately after the disconnecting of the modified Woodbridge connection transformer 3 by a circuit breaker 2. The residual magnetic flux calculation unit 604B obtains these integrated values as residual magnetic fluxes (primary line magnetic fluxes) φZuv, φZvw and φZwu of an iron core of the modified Woodbridge connection transformer 3. The residual magnetic flux calculation unit 604B outputs calculated residual magnetic fluxes φZuv, φZvw and φZwu to a phase detection unit 605.

The phase detection unit 605, similarly to the first embodiment, identifies an object phase region Tc to be closed, on the basis of steady magnetic fluxes φTuv, φTvw and φTwu calculated by a steady magnetic flux calculation unit 602 and residual magnetic fluxes φZuv, φZvw and φZwu calculated by the residual magnetic flux calculation unit 604B.

According to the present embodiment, even when the modified Woodbridge connection transformer 3 is provided only with the transformer secondary voltage detectors 5T and 5M, secondary voltages Vt and Vm of the modified Woodbridge connection transformer 3 are converted to primary-side line voltages VDuv, VDvw and VDwu, whereby a function and an effect similar to those of the first embodiment can be obtained.

(Fourth Embodiment)

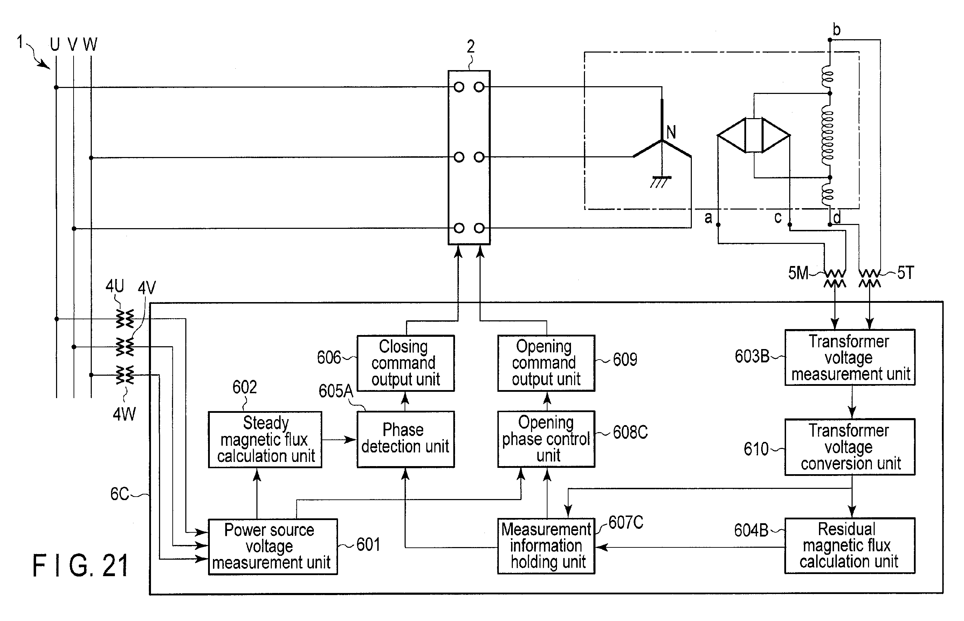

FIG. 21 is a block diagram showing a structure of a power system to which a magnetizing inrush current suppression apparatus 6C according to a fourth embodiment of the invention is applied.

The magnetizing inrush current suppression apparatus 6C has a structure where in the magnetizing inrush current suppression apparatus 6B according to the third embodiment shown in FIG. 17, the phase detection unit 605A according to the second embodiment is provided in place of the phase detection unit 605, and a measurement information holding unit 607C, an opening phase control unit 608C and the opening command output unit 609 according to the second embodiment are added. The other structure is similar to the magnetizing inrush current suppression apparatus 6B according to the third embodiment.

Prior to an operation of the magnetizing inrush current suppression apparatus 6C, the measurement information holding unit 607C measures respective line voltages VDuv, VDvw and VDwu converted by a transformer voltage conversion unit 610 and a magnetic flux signal calculated by a residual magnetic flux calculation unit 604B when a circuit breaker 2 is opened a plurality of times. The measurement information holding unit 607C holds, as measurement information, information on characteristics of a residual magnetic flux, for example, a relation between an interrupting phase and the residual magnetic flux on the basis of the measured voltage interrupting phase and magnetic flux signal.

Into the opening phase control unit 608C, there are input the measurement information held by the measurement information holding unit 607C and respective phase voltages of a power source bus 1 which are measured by a power source voltage measuring unit 601. The opening phase control unit 608C estimates primary line residual magnetic fluxes φZuv, φZvw and φZwu of a modified Woodbridge connection transformer 3 from the measurement information. The opening phase control unit 608C controls an opening phase of a main contact of the circuit breaker 2 so that the interrupting phase constantly becomes the same, on the basis of the estimated residual magnetic fluxes φZuv, φZvw and φZwu and the respective phase voltages. The opening phase control unit 608C outputs the controlled opening phase to the opening command output unit 609.

The opening command output unit 609 outputs an opening command to an operation mechanism which drives the main contact of the circuit breaker 2, on the basis of the opening phase received from the opening phase control unit 608C. Consequently, the circuit breaker 2 is opened.

The phase detection unit 605A, similarly to the second embodiment, identifies an object phase region Tc to be closed for closing the circuit breaker 2, on the basis of the measurement information held by the measurement information holding unit 607C and steady magnetic fluxes φTuv, φTvw and φTwu calculated by a steady magnetic flux calculation unit 602.

According to the present embodiment, it is possible to obtain a function and an effect similar to the respective functions and effects of the second embodiment and the third embodiment.

(Fifth Embodiment)

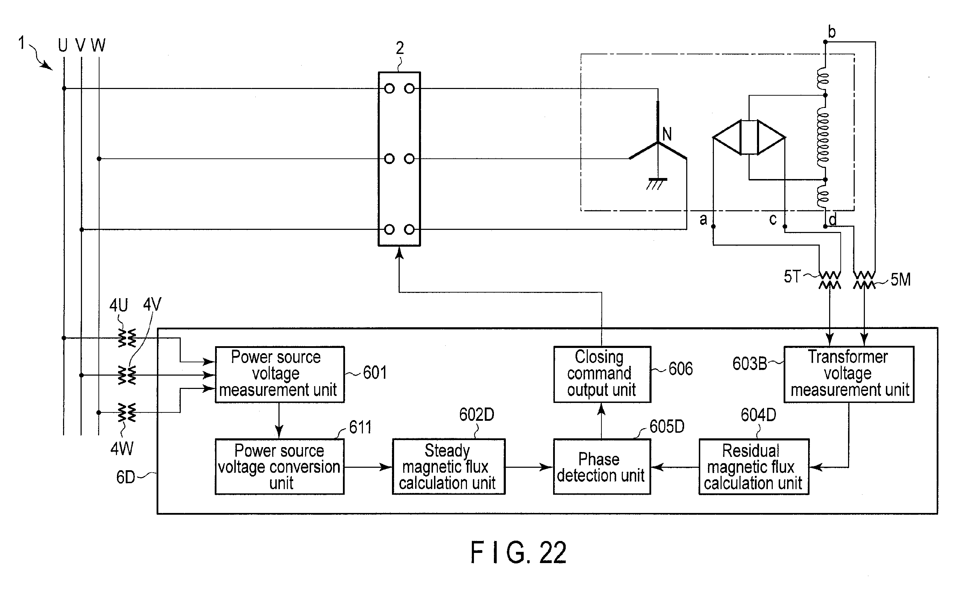

FIG. 22 is a block diagram showing a structure of a power system to which a magnetizing inrush current suppression apparatus 6D according to a fifth embodiment of the invention is applied.

The magnetizing inrush current suppression apparatus 6D has a structure where in the magnetizing inrush current suppression apparatus 6B according to the third embodiment shown in FIG. 17, a power source voltage conversion unit 611 is provided in place of the transformer voltage conversion unit 610, the steady magnetic flux calculation unit 602 is replaced with a steady magnetic flux calculation unit 602D, the residual magnetic flux calculation unit 604B is replaced with a residual magnetic flux calculation unit 604D, and the phase detection unit 605 is replaced with a phase detection unit 605D. The other structure is similar to the third embodiment.

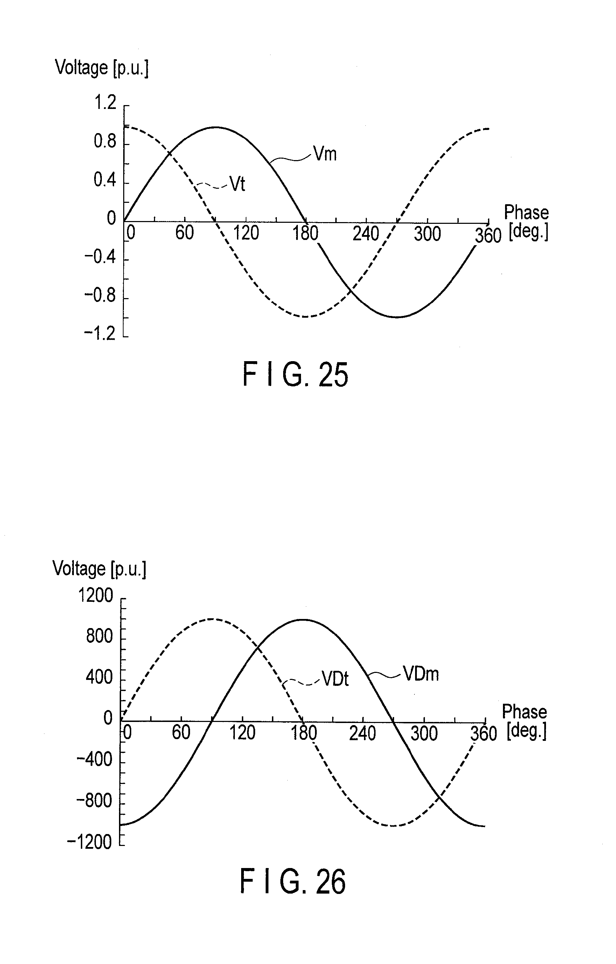

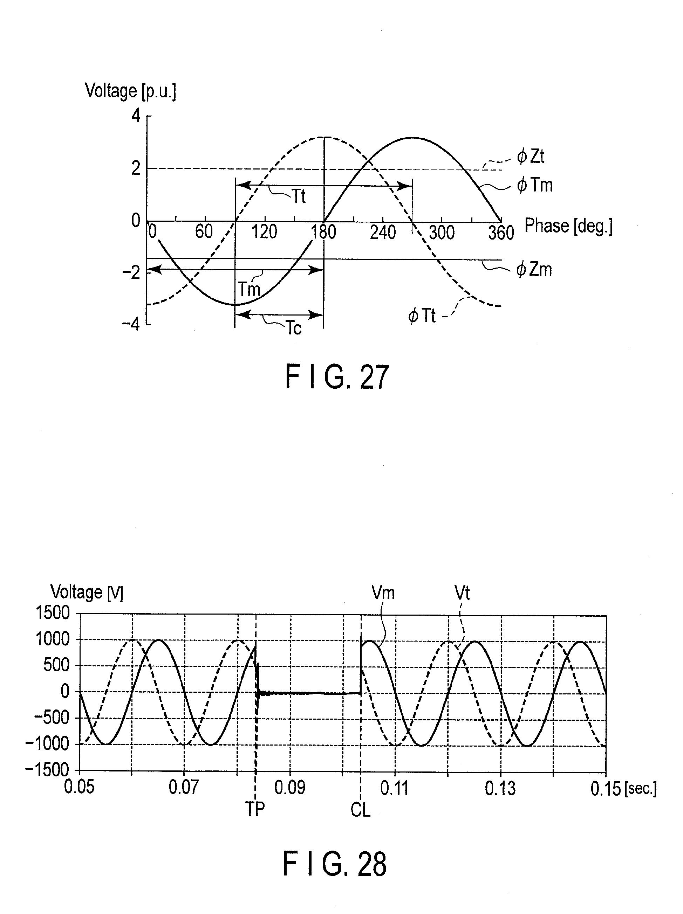

FIG. 26 is a waveform diagram showing voltage waveforms of secondary voltages VDm and VDt of a modified Woodbridge connection transformer 3 which are converted by the power source voltage conversion unit 611 according to the present embodiment. FIG. 27 is a waveform diagram showing magnetic flux waveforms for explaining an object phase region Tc to be closed of the magnetizing inrush current suppression apparatus 6D according to the present embodiment.

A structure of the magnetizing inrush current suppression apparatus 6D will be described with reference to FIG. 22, FIG. 26 and FIG. 27.

The residual magnetic flux calculation unit 604D integrates two secondary voltages Vt and Vm measured by the transformer voltage measuring unit 603B, respectively, immediately after disconnecting of a modified Woodbridge connection transformer 3 by a circuit breaker 2. The residual magnetic flux calculation unit 604D obtains these integrated values as residual magnetic fluxes (the secondary magnetic fluxes) $\varphi$Zm and $\varphi$Zt of an iron core of the modified Woodbridge connection transformer 3. Residual magnetic flux $\varphi$Zm is the secondary-side residual magnetic flux of a main transformer 302. Residual magnetic flux $\varphi$Zt is the secondary-side residual magnetic flux of a teaser transformer 301. The residual magnetic flux calculation unit 604D outputs calculated residual magnetic fluxes $\varphi$Zm and $\varphi$Zt to the phase detection unit 605D.

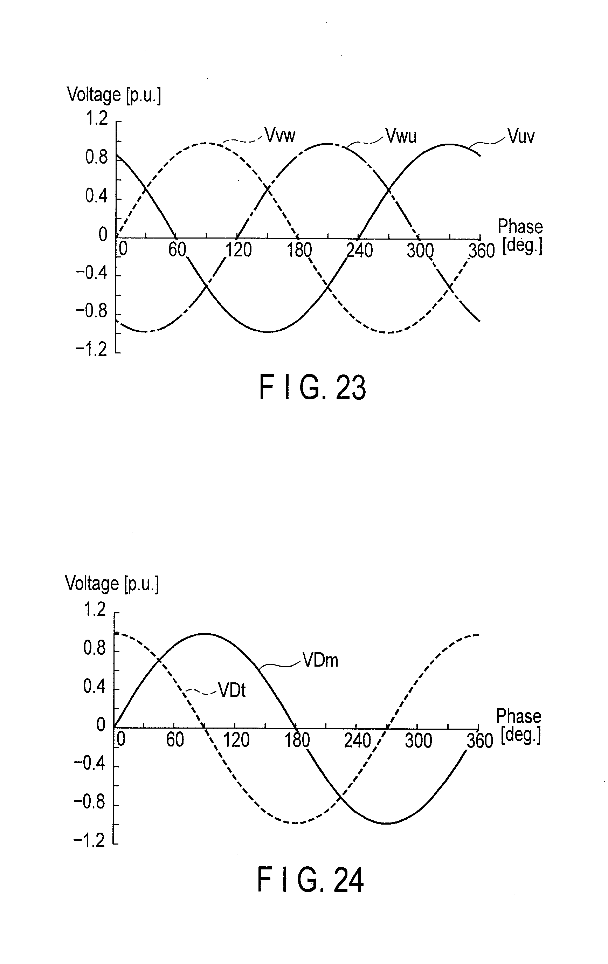

Computation processing by the power source voltage conversion unit 611 according to the present embodiment will be described with reference to FIG. 23 to FIG. 25.

FIG. 23 is a waveform diagram showing voltage waveforms of respective line voltages Vuv, Vvw and Vwu prior to the conversion by the power source voltage conversion unit 611. FIG. 24 is a waveform diagram showing voltage waveforms of secondary voltages VDm and VDt of the modified Woodbridge connection transformer 3 which are converted by the power source voltage conversion unit 611. FIG. 25 is a waveform diagram showing voltage waveforms of secondary voltages Vm and Vt of the modified Woodbridge connection transformer 3.

The power source voltage conversion unit 611 calculates the respective line voltages Vuv, Vvw and Vwu on the basis of respective phase voltages measured by the power source voltage measuring unit 601. The power source voltage conversion unit 611 converts respective calculated line voltages Vuv, Vvw and Vwu to the two secondary voltages VDm and VDt of the modified Woodbridge connection transformer 3 which are shown in FIG. 24, by the following equations.

$$VDm = Vvw \qquad\qquad (4)$$

$$VDt = (Vuv - Vwu)/\sqrt{3} \qquad (5)$$

Additionally, $1/\sqrt{3}$ may be replaced with 0.577.

Secondary voltage VDm is the converted secondary voltage of the main transformer 302. Secondary voltage VDt is the converted secondary voltage of the teaser transformer 301.

Consequently, the power source voltage conversion unit 611 can obtain the same voltage waveforms on a pu value (a ratio to a rating) basis as secondary voltages Vm and Vt shown in FIG. 25. The power source voltage conversion unit 611 outputs the two converted secondary voltages VDm and VDt of the modified Woodbridge connection transformer 3 to the steady magnetic flux calculation unit 602D.

The steady magnetic flux calculation unit 602D integrates the two secondary voltages VDm and VDt converted by the power source voltage conversion unit 611, respectively. The steady magnetic flux calculation unit 602D obtains these integrated values as steady-time magnetic fluxes (steady magnetic fluxes) $\varphi$Tm and $\varphi$Tt. The steady magnetic flux calculation unit 602D calculates steady magnetic fluxes $\varphi$Tm and $\varphi$Tt until the circuit breaker 2 is closed. The steady magnetic flux calculation unit 602D outputs calculated steady magnetic fluxes $\varphi$Tm and $\varphi$Tt to the phase detection unit 605D.

As shown in FIG. 27, the phase detection unit 605D detects phase sections Tm and Tt in which the polarities of steady magnetic fluxes $\varphi$Tm and $\varphi$Tt calculated by the steady magnetic flux calculation unit 602D match the polarities of residual magnetic fluxes φZm and φZt calculated by the residual magnetic flux calculation unit 604D, respectively, every between terminals on a secondary side. The phase detection unit 605D identifies the section Tc in which the detected phase sections Tm and Tt overlap with each other in two sections. The identified section Tc is the object phase region to be closed for closing the circuit breaker 2. The phase detection unit 605D outputs, to the closing command output unit 606, the detected object phase region (the section) Tc to be closed.

The closing command output unit 606 outputs the closing command to the operation mechanism which drives the main contact of the circuit breaker 2 in the object phase region Tc to be closed which is detected by the phase detection unit 605D. Consequently, the circuit breaker 2 is closed.

Next, suppression of a magnetizing inrush current by the magnetizing inrush current suppression apparatus 6D will be described with reference to FIG. 28 to FIG. 30.

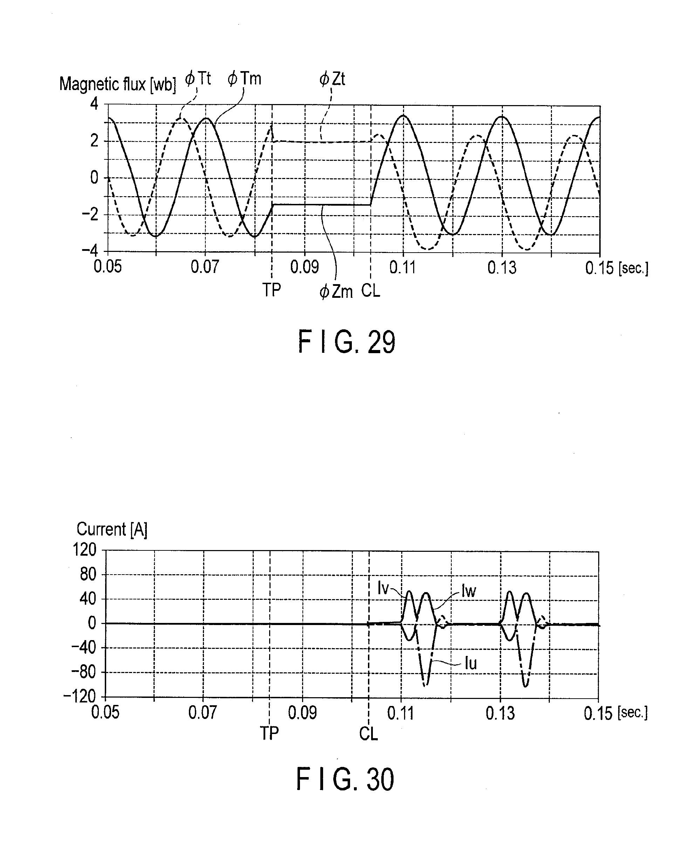

FIG. 28 to FIG. 30 show an example of a state from disconnecting TP to connecting CL of the modified Woodbridge connection transformer 3 by the circuit breaker 2. FIG. 28 is a waveform diagram showing secondary voltages Vm and Vt. FIG. 29 is a waveform diagram showing secondary magnetic fluxes (steady magnetic fluxes φTm and φTt and residual magnetic fluxes φZm and φZt). FIG. 30 is a waveform diagram showing magnetizing inrush currents Iu, Iv and Iw.

When secondary voltages Vm and Vt shown in FIG. 28 are applied to the secondary side of the modified Woodbridge connection transformer 3, after the disconnecting TP by the circuit breaker 2, residual magnetic fluxes φZm and φZt shown in FIG. 29 are present.

When the circuit breaker 2 is closed by the magnetizing inrush current suppression apparatus 6D, magnetizing inrush currents Iu, Iv and Iw shown in FIG. 30 are suppressed.

According to the present embodiment, steady magnetic fluxes φTm and φTt of the secondary magnetic fluxes of the modified Woodbridge connection transformer 3 can be obtained from line voltages Vuv, Vvw and Vwu of a power source bus 1. Therefore, residual magnetic fluxes φZm and φZt are obtained to measure the secondary voltages of the modified Woodbridge connection transformer 3, whereby the object phase region Tc to be closed for closing the circuit breaker 2 can be identified.

Therefore, even when the modified Woodbridge connection transformer 3 is provided only with transformer secondary voltage detectors 5T and 5M, phase control can be executed to suppress magnetizing inrush currents Iu, Iv and Iw.

(Sixth Embodiment)

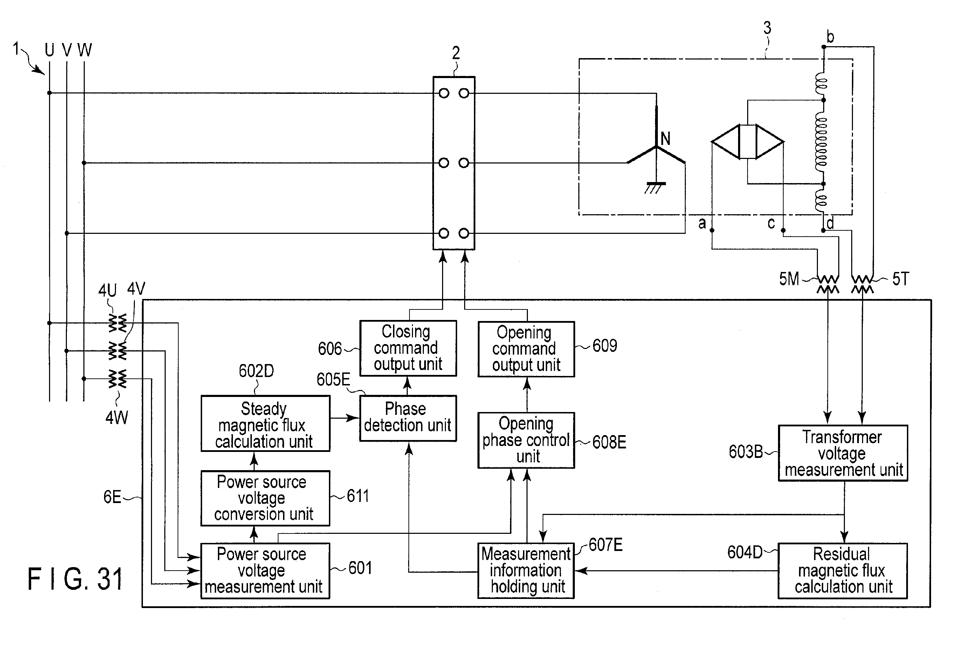

FIG. 31 is a block diagram showing a structure of a power system to which a magnetizing inrush current suppression apparatus 6E according to a sixth embodiment of the invention is applied.

The magnetizing inrush current suppression apparatus 6E has a structure where in the magnetizing inrush current suppression apparatus 6D according to the fifth embodiment shown in FIG. 22, a phase detection unit 605E is provided in place of the phase detection unit 605D, and a measurement information holding unit 607E, an opening phase control unit 608E and the opening command output unit 609 according to the second embodiment are added. The other structure is similar to the fifth embodiment.

Prior to an operation of the magnetizing inrush current suppression apparatus 6E, the measurement information holding unit 607E measures a voltage interrupting phase of secondary voltages Vm and Vt measured by the transformer voltage measuring unit 603B and a magnetic flux signal calculated by the residual magnetic flux calculation unit 604D when the circuit breaker 2 is opened a plurality of times. The measurement information holding unit 607E holds, as measurement information, information on characteristics of a residual magnetic flux, for example, a relation between the interrupting phase and the residual magnetic flux on the basis of the measured voltage interrupting phase and the magnetic flux signal.

Into the opening phase control unit 608E, there are input the measurement information held by the measurement information holding unit 607E and respective phase voltages of the power source bus 1 which are measured by the power source voltage measuring unit 601. The opening phase control unit 608E estimates residual magnetic fluxes φZm and φZt of the secondary winding of the modified Woodbridge connection transformer 3 from the measurement information. The opening phase control unit 608E controls an opening phase of the main contact of the circuit breaker 2 so that the interrupting phase constantly becomes the same, on the basis of the estimated residual magnetic fluxes φZm and φZt and the respective phase voltages. The opening phase control unit 608E outputs the controlled opening phase to the opening command output unit 609.

The opening command output unit 609 outputs the opening command to the operation mechanism which drives the main contact of the circuit breaker 2, on the basis of the opening phase received from the opening phase control unit 608E. Consequently, the circuit breaker 2 is opened.

Into the phase detection unit 605E, there are input the measurement information held by the measurement information holding unit 607E and steady magnetic fluxes φTm and φTt of secondary magnetic fluxes of the modified Woodbridge connection transformer 3 which are calculated by the steady magnetic flux calculation unit 602D. The phase detection unit 605E estimates residual magnetic fluxes φZm and φZt from the measurement information held by the measurement information holding unit 607E. The phase detection unit 605E identifies the object phase region Tc to be closed for closing the circuit breaker 2, on the basis of residual magnetic fluxes φZm and φZt and steady magnetic fluxes φTm and φTt. A method of identifying the object phase region Tc to be closed is similar to the fifth embodiment.

Here, the opening phase control unit 608E executes the phase control so that the interrupting phase constantly becomes the same. Therefore, the phase detection unit 605E may constantly detect the same object phase region Tc to be closed, when there is not any change in the information held by the measurement information holding unit 607E (when the measurement information is not updated).

According to the present embodiment, it is possible to obtain a function and an effect similar to the respective functions and effects of the fifth embodiment and the second embodiment.

Additionally, in the respective embodiments, the power source voltage detectors 4U, 4V and 4W measure the respective phase voltages of the power source bus 1, but may measure the respective line voltages of the power source bus 1. Consequently, the calculation processing to convert the phase voltage to the line voltage can be omitted.

Further in the respective embodiments, various parameters in the phase control by the magnetizing inrush current suppression apparatus 6 or the like may be corrected for the purpose of further enhancing an accuracy, or the like. For example, in the closing of the circuit breaker 2, a variation of a closing time is present owing to advance discharge called pre-arc generated between the main contacts, an operation variation of the operation mechanism, or the like. Characteristics of the closing variation due to this pre-arc and the variation at the closing of the circuit breaker are acquired beforehand, thereby performing correction in accordance with these characteristics when executing the phase control. Such a correction is performed, whereby the magnetizing inrush current can more securely be suppressed even when these variations are present.

Moreover, in the respective embodiments, when the steady magnetic flux and the residual magnetic flux are calculated, for example, the phase voltages are converted to the line voltages, or the line voltages are converted to various winding voltages. The voltages are converted in this manner, and the magnetic fluxes are then obtained, but after obtaining the magnetic fluxes, the magnetic fluxes may be converted. For example, when each line magnetic flux is obtained from each phase voltage, the magnetic flux of each phase may first be obtained, and then each line magnetic flux may be obtained. Moreover, also in the other calculations, an order of calculations or places where the computations are performed (a computer, various detectors, etc., regardless of whether the places are inside or outside the magnetizing inrush current suppression apparatus) can suitably be changed, as long as the results are the same.

Further in the respective embodiments, the circuit breaker 2 is the three-phase collective operation type circuit breaker, but may be an each-phase operation type circuit breaker which operates each phase. In the case of the each-phase operation type circuit breaker, the circuit breakers of the respective phases are simultaneously closed, whereby a function and an effect similar to those of the three-phase collective operation type circuit breaker can be obtained.

While certain embodiments of the invention have been described, these embodiments have been presented by way of example only, and are not intended to limit the scope of the inventions. Indeed, the novel methods and systems described herein may be embodied in a variety of forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. A magnetizing inrush current suppression apparatus that suppresses a magnetizing inrush current of a circuit breaker to open and close a connection between a three-phase alternating-current power system including a power source and a Woodbridge connection or modified Woodbridge connection transformer, the apparatus **characterized by** comprising:

transformer-side three-phase alternating-current voltage measuring means for measuring a three-phase alternating-current voltage on the transformer side of the circuit breaker;
residual magnetic flux calculation means for calculating residual magnetic fluxes of three lines of the transformer after disconnecting of the transformer by the circuit breaker, based on the three-phase alternating-current voltage measured by the transformer-side three-phase alternating-current voltage measuring means;
power-source-side three-phase alternating-current voltage measuring means for measuring a three-phase alternating-current voltage on the power source side of the circuit breaker;
steady magnetic flux calculation means for calculating steady magnetic fluxes of the three lines of the transformer based on the three-phase alternating-current voltage measured by the power-source-side three-phase alternating-current voltage measuring means;
phase determination means for determining a phase in which polarities of the steady magnetic fluxes of the three lines calculated by the steady magnetic flux calculation means match polarities of the residual magnetic fluxes of the three lines calculated by the residual magnetic flux calculation means in the three lines, respectively; and
closing means for closing the circuit breaker in the phase determined by the phase determination means.

2. A magnetizing inrush current suppression apparatus that suppresses a magnetizing inrush current of a circuit breaker to open and close a connection between a three-phase alternating-current power system including a power source and a Woodbridge connection or modified Woodbridge connection transformer, the apparatus **characterized by** comprising:

transformer-side three-phase alternating-current voltage measuring means for measuring a three-phase alternating-current voltage on the transformer side of the circuit breaker;
residual magnetic flux calculation means for calculating three lines of residual magnetic fluxes of the transformer after disconnecting of the transformer by the circuit breaker, based on the three-phase alternating-current voltage measured by the transformer-side three-phase alternating-current voltage measuring means;
line detection means for detecting a line of the largest residual magnetic flux of the three lines of the residual magnetic fluxes calculated by the residual magnetic flux calculation means;
power-source-side three-phase alternating-current voltage measuring means for measuring a three-phase alternating-current voltage on the power source side of the circuit breaker;
phase determination means for determining a phase of a voltage zero point at which a line voltage based on the three-phase alternating-current voltage measured by the power-source-side three-phase alternating-current voltage measuring means transits from the same polarity as that of the residual magnetic flux of the line calculated by the residual magnetic flux calculation means to reverse polarity in the line detected by the line detection means; and
closing means for closing the circuit breaker in the phase determined by the phase determination means.

3. A magnetizing inrush current suppression apparatus that suppresses a magnetizing inrush current of a circuit breaker to open and close a connection between a three-phase alternating-current power system including a power source and a Woodbridge connection or modified Woodbridge connection transformer, the apparatus **characterized by** comprising:

transformer-side single-phase alternating-current voltage measuring means for measuring a single-phase alternating-current voltage of the transformer;
transformer-side voltage conversion means for converting, to a three-phase alternating-current voltage of the transformer, the single-phase alternating-current voltage of the transformer measured by the transformer-side single-phase alternating-current voltage measuring means;
residual magnetic flux calculation means for calculating residual magnetic fluxes of three lines of the transformer after disconnecting of the transformer by the circuit breaker, based on the three-phase alternating-current voltage converted by the transformer-side voltage conversion means;
power-source-side three-phase alternating-current voltage measuring means for measuring a three-phase alternating-current voltage on the power source side of the circuit breaker;
steady magnetic flux calculation means for calculating steady magnetic fluxes of the three lines of the transformer based on the three-phase alternating-current voltage measured by the power-source-side three-phase alternating-current voltage measuring means;
phase determination means for determining a phase in which polarities of the steady magnetic fluxes of the three lines calculated by the steady magnetic flux calculation means match polarities of the residual magnetic fluxes of the three lines calculated by the residual magnetic flux calculation means in the three lines, respectively; and
closing means for closing the circuit breaker in the phase determined by the phase determination means.

4. A magnetizing inrush current suppression apparatus that suppresses a magnetizing inrush current of a circuit breaker to open and close a connection between a three-phase alternating-current power system including a power source and a Woodbridge connection or modified Woodbridge connection transformer, the apparatus **characterized by** comprising:

transformer-side single-phase alternating-current voltage measuring means for measuring a single-phase alternating-current voltage of the transformer;

transformer-side voltage conversion means for converting, to a three-phase alternating-current voltage of the transformer, the single-phase alternating-current voltage of the transformer measured by the transformer-side single-phase alternating-current voltage measuring means;

residual magnetic flux calculation means for calculating residual magnetic fluxes of three lines of the transformer after disconnecting of the transformer by the circuit breaker, based on the three-phase alternating-current voltage converted by the transformer-side voltage conversion means;

line detection means for detecting a line of the largest residual magnetic flux of the residual magnetic fluxes of the three lines calculated by the residual magnetic flux calculation means;

power-source-side three-phase alternating-current voltage measuring means for measuring a three-phase alternating-current voltage on the power source side of the circuit breaker;

phase determination means for determining a phase of a voltage zero point at which a line voltage based on the three-phase alternating-current voltage converted by the transformer-side voltage conversion means transits from the same polarity as that of the residual magnetic flux of the line calculated by the residual magnetic flux calculation means to reverse polarity in the line detected by the line detection means; and

closing means for closing the circuit breaker in the phase determined by the phase determination means.

5. A magnetizing inrush current suppression apparatus that suppresses a magnetizing inrush current of a circuit breaker to open and close a connection between a three-phase alternating-current power system including a power source and a Woodbridge connection or modified Woodbridge connection transformer, the apparatus **characterized by** comprising:

transformer-side single-phase alternating-current voltage measuring means for measuring a single-phase alternating-current voltage of the transformer;

residual magnetic flux calculation means for calculating a residual magnetic flux of a single-phase alternating-current-side winding of the transformer after disconnecting of the transformer by the circuit breaker, based on the single-phase alternating-current voltage measured by the transformer-side single-phase alternating-current voltage measuring means;

power-source-side three-phase alternating-current voltage measuring means for measuring a three-phase alternating-current voltage on the power source side of the circuit breaker;

power-source-side voltage conversion means for converting, to the single-phase alternating-current voltage of the transformer, the three-phase alternating-current voltage measured by the power-source-side three-phase alternating-current voltage measuring means;

steady magnetic flux calculation means for calculating a steady magnetic flux of the single-phase alternating-current-side winding of the transformer based on the single-phase alternating-current voltage converted by the power-source-side voltage conversion means;

phase determination means for determining a phase in which the steady magnetic flux of the single-phase alternating-current-side winding calculated by the steady magnetic flux calculation means matches the residual magnetic flux of the single-phase alternating-current-side winding calculated by the residual magnetic flux calculation means; and

closing means for closing the circuit breaker in the phase determined by the phase determination means.

6. The magnetizing inrush current suppression apparatus according to any one of claims 1 to 5, **characterized by** further comprising:

measurement information holding means for holding information obtained by measuring the residual magnetic flux of the transformer and an interrupting phase of the circuit breaker when the circuit breaker is subjected to an opening operation at least once; and

opening means for opening the circuit breaker in the same interrupting phase based on the information held by the measurement information holding means,

wherein the closing means closes the circuit breaker based on the interrupting phase by the opening means.

7. The magnetizing inrush current suppression apparatus according to any one of claims 1 to 6, **characterized in that** the circuit breaker is a three-phase collective type which collectively operates contacts of three phases.

8. The magnetizing inrush current suppression apparatus according to any one of claims 1 to 6, **characterized in that** the circuit breaker is an each-phase operation type which operates a contact of each phase, and

simultaneously closes and opens the contacts of the three phases.

9. A magnetizing inrush current suppression method that suppresses a magnetizing inrush current of a circuit breaker to open and close a connection between a three-phase alternating-current power system including a power source and a Woodbridge connection or modified Woodbridge connection transformer, the method **characterized by** comprising:

measuring a three-phase alternating-current voltage on the transformer side of the circuit breaker;
calculating residual magnetic fluxes of three lines of the transformer after disconnecting of the transformer by the circuit breaker, based on the measured transformer-side three-phase alternating-current voltage;
measuring a three-phase alternating-current voltage on the power source side of the circuit breaker;
calculating steady magnetic fluxes of the three lines of the transformer based on the measured power-source-side three-phase alternating-current voltage;
determining a phase in which polarities of the calculated steady magnetic fluxes of the three lines match polarities of the calculated residual magnetic fluxes of the three lines in the three lines, respectively; and
closing the circuit breaker in the determined phase.

10. A magnetizing inrush current suppression method that suppresses a magnetizing inrush current of a circuit breaker to open and close a connection between a three-phase alternating-current power system including a power source and a Woodbridge connection or modified Woodbridge connection transformer, the method **characterized by** comprising:

measuring a three-phase alternating-current voltage on the transformer side of the circuit breaker;
calculating residual magnetic fluxes of three lines of the transformer after disconnecting of the transformer by the circuit breaker, based on the measured transformer-side three-phase alternating-current voltage;
detecting a line of the largest residual magnetic flux of the calculated residual magnetic fluxes of the three lines;
measuring a three-phase alternating-current voltage on the power source side of the circuit breaker;
determining a phase of a voltage zero point at which a line voltage based on the measured power-source-side three-phase alternating-current voltage transits from the same polarity as that of the calculated residual magnetic flux of the line to reverse polarity in the detected line of the largest residual magnetic flux; and
closing the circuit breaker in the determined phase.

11. A magnetizing inrush current suppression method that suppresses a magnetizing inrush current of a circuit breaker to open and close a connection between a three-phase alternating-current power system including a power source and a Woodbridge connection or modified Woodbridge connection transformer, the method **characterized by** comprising:

measuring a single-phase alternating-current voltage of the transformer;
converting the measured single-phase alternating-current voltage of the transformer to a three-phase alternating-current voltage of the transformer;
calculating residual magnetic fluxes of three lines of the transformer after disconnecting of the transformer by the circuit breaker, based on the converted three-phase alternating-current voltage of the transformer;
measuring a three-phase alternating-current voltage on the power source side of the circuit breaker;
calculating steady magnetic fluxes of the three lines of the transformer based on the measured power-source-side three-phase alternating-current voltage;
determining a phase in which polarities of the calculated steady magnetic fluxes of the three lines match polarities of the calculated residual magnetic fluxes of the three lines in the three lines, respectively; and
closing the circuit breaker in the determined phase.

12. A magnetizing inrush current suppression method that suppresses a magnetizing inrush current of a circuit breaker to open and close a connection between a three-phase alternating-current power system including a power source and a Woodbridge connection or modified Woodbridge connection transformer, the method **characterized by** comprising:

measuring a single-phase alternating-current voltage of the transformer;
converting the measured single-phase alternating-current voltage of the transformer to a three-phase alternating-current voltage of the transformer;
calculating residual magnetic fluxes of three lines of the transformer after disconnecting of the transformer by the circuit breaker, based on the converted three-phase alternating-current voltage of the transformer;
detecting a line of the largest residual magnetic flux of the calculated residual magnetic fluxes of the three lines;
measuring a three-phase alternating-current voltage on the power source side of the circuit breaker;
determining a phase of a voltage zero point at which a line voltage based on the measured power-source-side three-phase alternating-current voltage transits from the same polarity as that of the calculated residual magnetic flux of the line to reverse polarity in the detected line of the largest residual magnetic flux; and
closing the circuit breaker in the determined phase.

13. A magnetizing inrush current suppression method that suppresses a magnetizing inrush current of a circuit breaker to open and close a connection between a three-phase alternating-current power system including a power source and a Woodbridge connection or modified Woodbridge connection transformer, the method **characterized by** comprising:

measuring a single-phase alternating-current voltage of the transformer;
calculating a residual magnetic flux of a single-phase alternating-current-side winding of the transformer after disconnecting of the transformer by the circuit breaker, based on the measured single-phase alternating-current voltage;
measuring a three-phase alternating-current voltage on the power source-side of the circuit breaker;
converting the measured power-source-side three-phase alternating-current voltage to the single-phase alternating-current voltage of the transformer;
calculating a steady magnetic flux of the single-phase alternating-current-side winding of the transformer based on the converted single-phase alternating-current voltage of the transformer;
determining a phase in which the calculated steady magnetic flux of the single-phase alternating-current-side winding matches the calculated residual magnetic flux of the single-phase alternating-current-side winding; and
closing the circuit breaker in the determined phase.

14. The magnetizing inrush current suppression method according to any one of claims 9 to 13, **characterized by** further comprising:

holding information obtained by measuring the residual magnetic flux of the transformer and an interrupting phase of the circuit breaker when the circuit breaker is subjected to an opening operation at least once;
opening the circuit breaker in the same interrupting phase based on the held information; and
closing the circuit breaker based on the interrupting phase.

F I G. 1

EP 2 608 239 A1

F I G. 2

F I G. 3

FIG. 4

FIG. 5

FIG. 6

FIG. 7

F I G. 8

F I G. 9

F I G. 10

F I G. 11

F I G. 12

F I G. 13

F I G. 14

F I G. 15

EP 2 608 239 A1

F I G. 16

| Block | Label |
|---|---|
| 606 | Closing command output unit |
| 609 | Opening command output unit |
| 602 | Steady magnetic flux calculation unit |
| 605A | Phase detection unit |
| 608 | Opening phase control unit |
| 603 | Transformer voltage measurement unit |
| 601 | Power source voltage measurement unit |
| 607 | Measurement information holding unit |
| 604 | Residual magnetic flux calculation unit |

U V W

1

2

4U 4V 4W

5U 5W 5V

6A

N

a b c d

FIG. 17

Power source voltage measurement unit — 601

Steady magnetic flux calculation unit — 602

Phase detection unit — 605

Closing command output unit — 606

Residual magnetic flux calculation unit — 604B

Transformer voltage conversion unit — 610

Transformer voltage measurement unit — 603B

4U 4V 4W

6B

5T

5M

U V W

1

2

N

a b c d

Voltage [p.u.]

1.2

0.8

0.4

0

-0.4

-0.8

-1.2

0    60   120   180   240   300   360

Vm    Vt

Phase [deg.]

F I G. 18

Voltage [p.u.]

1.2

0.8

0.4

0

-0.4

-0.8

-1.2

0    60   120   180   240   300   360

VDvw    VDwu    VDuv

Phase [deg.]

F I G. 19

F I G. 20

**FIG. 21**

F I G. 22

Voltage [p.u.]

F I G. 23

Voltage [p.u.]

F I G. 24

Voltage [p.u.]

1.2
0.8
0.4
0
-0.4
-0.8
-1.2

Vm

Vt

0   60   120   180   240   300   360

Phase [deg.]

# F I G. 25

Voltage [p.u.]

1200
800
400
0
-400
-800
-1200

VDt   VDm

0   60   120   180   240   300   360

Phase [deg.]

# F I G. 26

F I G. 27

F I G. 28

F I G. 29

F I G. 30

F I G. 31

## EP 2 608 239 A1

**INTERNATIONAL SEARCH REPORT**

| | International application No. |
|---|---|
| | PCT/JP2011/068474 |

### A. CLASSIFICATION OF SUBJECT MATTER
*H01H33/59*(2006.01)i, *H01H9/54*(2006.01)i, *H01H9/56*(2006.01)i, *H02H9/02*
(2006.01)i

According to International Patent Classification (IPC) or to both national classification and IPC

### B. FIELDS SEARCHED

Minimum documentation searched (classification system followed by classification symbols)
H01H33/59, H01H9/54, H01H9/56, H02H9/02, H02H3/36, H02H7/04

Documentation searched other than minimum documentation to the extent that such documents are included in the fields searched
Jitsuyo Shinan Koho        1922-1996   Jitsuyo Shinan Toroku Koho   1996-2011
Kokai Jitsuyo Shinan Koho  1971-2011   Toroku Jitsuyo Shinan Koho   1994-2011

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | WO 2008/065757 A1 (Toshiba Corp.),<br>05 June 2008 (05.06.2008),<br>entire text; fig. 1 to 24<br>(Family: none) | 1,2,6-10,14<br>3-5,11-13 |
| Y<br>A | JP 3-132436 A (Meidensha Corp.),<br>05 June 1991 (05.06.1991),<br>entire text; fig. 1, 2<br>(Family: none) | 1,2,6-10,14<br>3-5,11-13 |
| A | JP 2010-4686 A (Toshiba Corp.),<br>07 January 2010 (07.01.2010),<br>entire text; fig. 1 to 10<br>& US 2010/0039737 A1   & CN 101609983 A | 1-14 |

☒ Further documents are listed in the continuation of Box C.　　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>29 August, 2011 (29.08.11) | Date of mailing of the international search report<br>13 September, 2011 (13.09.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/068474

C (Continuation). DOCUMENTS CONSIDERED TO BE RELEVANT

| Category* | Citation of document, with indication, where appropriate, of the relevant passages | Relevant to claim No. |
|---|---|---|
| P,A | JP 2011-154974 A (Toshiba Corp.),<br>11 August 2011 (11.08.2011),<br>entire text; fig. 1 to 37<br>(Family: none) | 1-14 |

Form PCT/ISA/210 (continuation of second sheet) (July 2009)

## REFERENCES CITED IN THE DESCRIPTION

**Patent documents cited in the description**

- JP 2002075145 A

- JP 2008160100 A

**Non-patent literature cited in the description**

- **JOHN H. BRUNKE.** Elimination of Transformer In-rush Currents by Controlled Switching - Part I: Theoretical Considerations. *IEEE Transactions on Power Delivery,* April 2001, vol. 16 (2), 276-280